# EUROPÄISCHE PATENTSCHRIFT

(11) **EP 1 396 365 B1**
(45) Veröffentlichungstag und Bekanntmachung des Hinweises auf die Patenterteilung: **14.06.2006**
(21) Anmeldenummer: 03017565.7
(22) Anmeldetag: 07.08.2003
(51) Int. Cl.: B60J 7/05

(54) **Führungsmechanik für einen Deckel eines Kfz-Schiebehebedachs**
Guiding mechanism for a panel of a vehicle sliding tilting roof
Méchanisme de guidage pour un toit ouvrant-coulissant de véhicule

(30) Priorität: 03.09.2002 DE 10240635
(43) Veröffentlichungstag der Anmeldung: 10.03.2004
(73) Patentinhaber: ArvinMeritor GmbH, 63128 Dietzenbach (DE)
(72) Erfinder: Bachmann, Hubert, 67125 Dannstadt (DE); Weiss, Edgar, 63755 Alzenau (DE)
(74) Vertreter: Kitzhofer, Thomas

(56) Entgegenhaltungen:
- EP-A- 0 403 734
- EP-A- 0 554 946
- DE-A- 2 245 084
- US-A- 4 936 622
- US-A- 4 982 995

## Beschreibung

Die Erfindung betrifft eine Führungsmechanik für einen Deckel eines Kfz-Schiebehebedachs, mit wenigstens einer mit dem Deckel zumindest indirekt gekoppelten Führungskulisse und mit einer am hinteren Rand des Deckels quer zum Fahrzeug verlaufenden Wasserablaufrinne mit zugeordnetem Lagerteil, das zusammen mit der Wasserablaufrinne bei horizontaler Verschiebung des Deckels ebenfalls verschoben wird.

Ein Schiebehebedach offenbart die DE-A-22 45 084, wobei ein Deckel in eine angehobene Stellung verfahren werden kann sowie in eine abgesenkte Stellung, in der ein Verschieben des Deckels unter das Fahrzeugdach samt Wasserablaufrinne ermöglicht wird. Eine horizontal bewegliche Traverse ist dabei mit dem Deckel gekoppelt und sorgt für die verschiedenen Bewegungen des Schwenkschiebedachs.

Die gattungsgemäße EP-A-0 403 734 stellt ein Schiebehebedach für Kraftfahrzeuge vor, dessen Deckel angehoben oder nach hinten unter das Fahrzeugdach verfahren werden kann. Die Wasserablaufrinne wird mit dem Deckel beim Verschieben mitgenommen. In der ausgestellten Position des Deskels ist die Führungskulisse in horizontaler Verschieberichtung vollständig von der Wasserablaufrinne entkoppelt.

Aus der DE 44 05 742 C1 oder der DE 195 14 585 A1 sind auch Führungsmechaniken bekannt. Üblicherweise sind seitlich des Deckels Profilschienen angeordnet, und in jeder Profilschiene laufen wenigstens ein sogenannter vorderer Gleitschuh und ein sogenannter hinterer Gleitschuh, wobei die Begriffe "vorne" und "hinten" auf den im Fahrzeug eingebauten Zustand und auf die Fahrzeuglängsrichtung bezogen sind. Der vordere Gleitschuh bildet das Schwenklager einer hebelartigen Führungskulisse mit mindestens einer seitlichen Kulissenbahn. Die Führungskulisse ist mit dem Deckel indirekt oder direkt gekoppelt. In die in der Führungskulisse ausgebildete Kulissenbahn greift ein Kulissenstein ein, welcher mit dem hinteren Gleitschuh verbunden ist. Der hintere Gleitschuh wird üblicherweise über ein drucksteif geführtes Kabel angetrieben. Bei Verschiebung des hinteren Gleitschuhs wandert der Kulissenstein in der Kulissenbahn und sorgt für ein Verschwenken der Führungskulisse und damit für ein Verschwenken des Deckels, um diesen zum Beispiel auszustellen oder, vor seinem Verschieben, am hinteren Ende abzusenken. Ein Lagerteil für die unter dem hinteren Rand des Deckels positioniertewasserablaufrinne ist üblicherweise ein separater Gleitschuh, der mit der Führungskulisse im Stand der Technik mechanisch starr über ein Gestänge indirekt oder direkt gekoppelt ist. Eine Rastsicherung im Bereich des Lagerteils sorgt dafür, daß die gesamte verfahrbare Einheit in der Ausstellposition und den Zwischenstellungen bis zur Grundposition (Schließstellung des Deckels) gegen unbeabsichtigtes horizontales Verschieben gesichert ist.

Die Erfindung hat die Aufgabe, die Führungsmechanik für den Deckel eines Schiebehebedachs einfacher und sicherer auszuführen. Dies wird bei einer Führungsmechanik der eingangs genannten Art dadurch erreicht, daß die Führungskulisse in einer Grundposition des Deckels in horizontalen Richtung (Fahrzeuglängsrichtung) mit der Wasserablaugrinne formschlüssig gekoppelt ist. Bei der erfindungsgemäßen Führungsmechanik ist im Gegensatz zum Stand der Technik keine starre Koppelung in Verschieberichtung über einen Verbindungshebel oder ein Verbindungsgestänge vorgesehen, so daß entsprechende, bislang relativ lange Teile entfallen können.

Zumindest ein Teil der die Führungskulisse aufweisenden Einheit, vorzugsweise die Führungskulisse selbst, greift neben der Grund- auch in der abgesenkten Position des Deckels formschlüssig in die Einheit aus Wasserrinne und Lagerteil ein, um diese beiden Einheiten in horizontaler Richtung formschlüssig miteinander zu koppeln. In der Grund- und in der abgesenkten Position, in der die beiden einzelnen Einheiten ja auch als eine gemeinsame Einheit verschoben werden sollten, sind sie deshalb starr miteinander gekoppelt.

Das Lagerteil der Wasserablaufrinne hat vorzugsweise eine in der ausgestellten Position des Deckels wirkende eigene Positionssicherung, zum Beispiel eine formschlüssige Verrastung zwischen einem dem Lagerteil zugeordneten Rasthaken und einer Profilschiene, längs der das Lagerteil samt der Ablaufrinne verschiebbar ist.

Der Rasthaken ist z.B. federnd angestellt und rastet in eine lokale Ausnehmung in der Profilschiene ein, sobald er eine entsprechende Position erreicht hat.

Das Lagerteil ist vorteilhafterweise ein in der Profilschiene verschiebbares Kunststoffteil. Auch der Rasthaken ist vorzugsweise ebenfalls ein Kunststoffteil, das an eine Feder angespritzt ist. Dabei kann vorgesehen sein, daß an die Feder auch noch ein Formstück angespritzt ist, welches formschlüssig in eine entsprechende Ausnehmung in dem Lagerteil eingesetzt werden kann. Damit ist es möglich, Mehrkomponenten-Kunststoffteile zu vermeiden, denn der Rasthaken muß andere Eigenschaften haben als das leicht gleitende Lagerteil.

Vorzugsweise hat die Führungskulisse im Bereich ihres hinteren Endes eine nach unten weisende Nase, die in eine Ausnehmung im Lagerteil taucht. Damit sind keine weiteren Zwischenteile erforderlich, und das Führungsteil ist sehr einfach ausgeführt, denn die Nase kann einstückig an die Führungskulisse angespritzt sein.

In der Ausstellposition hat die die Führungskulisse aufweisende Einheit wenigstens ein Teil, das direkt in der Profilschiene formschlüssig so verriegelt ist, daß der Deckel an einer Verschiebung gehindert wird.

Weitere Merkmale und Vorteile ergeben sich aus der nachfolgenden Beschreibung und aus den nachfolgenden Zeichnungen, auf die Bezug genommen wird.

In den Zeichnungen zeigen:
Figur 1 eine Längsschnittansicht durch die erfindungsgemäße Führungsmechanik in der ausgestellten Position,
Figur 2 eine Längsschnittansicht durch die erfindungsgemäße Führungsmechanik in der Grundposition,
Figur 3 eine Längsschnittansicht durch die erfindungsgemäße Führungsmechanik in der abgesenkten Position,
Figur 4 eine vergrößerte Detailansicht des hinteren Endes der Führungsmechanik in der Grundposition,
Figur 5 eine Draufsicht auf einen Abschnitt der Führungskulisse und der Profilschiene im Bereich des vorderen Endes der Führungskulisse,
Figuren 6a und 6b Schnittansichten längs der Linien A-A bzw. B-B in Figur 5,
Figur 7 eine perspektivische Ansicht der Lagerung der Wasserablaufrinne mit daran befestigtem Rasthaken,
Figur 8 den Rasthaken samt einer Blattfeder und einem mit angespritzten Formstück.

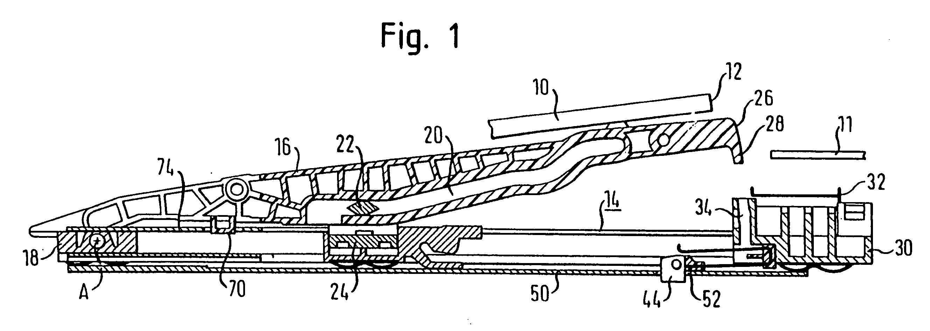

In Figur 1 ist die Führungsmechanik für den Deckel 10 eines Fahrzeugschiebehebedachs in einer Ansicht seitlich zum Fahrzeug dargestellt. Die Führungsmechanik dient dazu, den Deckel 10 in die verschiedenen Positionen zu bringen, nämlich in die ausgestellte Position, in die Grundposition (auch geschlossene Stellung genannt) und in die abgesenkte Position, in der der Deckel samt der gesamten Führungsmechanik nach hinten gefahren wird und unter das Dach taucht. Mit 11 ist der Dachrand bezeichnet, der den Dachausschnitt begrenzt. Mit 12 ist der hintere Rand des nur ganz schematisch dargestellten Deckels bezeichnet.

Die Führungsmechanik ist an beiden Seiten des Deckels 10 im wesentlichen identisch ausgebildet, weshalb in Figur 1 die Führungsmechanik nur an einer Seite dargestellt ist. Die Führungsmechanik umfaßt auf jeder Seite des Dachausschnitts eine C-förmige Profilschiene 14, die am Rand des Dachausschnitts starr befestigt ist und die in den Figuren ohne den üblicherweise integrierten Wasserablaufkanal dargestellt ist. Ein Hebel in Form einer Führungskulisse 16 aus einem Einkomponenten-Kunststoff ist mit dem Deckel 10 mittelbar oder unmittelbar gekoppelt und am gegenüberliegenden Ende in einem vorderen Gleitschuh 18 schwenkbar aufgenommen. Mit A ist die Schwenkachse der Führungskulisse 16 bezeichnet. Die Führungskulisse 16 besitzt auf jeder ihrer beiden Seitenflächen eine Kulissenbahn 20, wobei beide Kulissenbahnen 20 identisch ausgeführt sind, so daß es ausreicht, nur eine darzustellen. In jeder Kulissenbahn 20 läuft ein Kulissenstein in Form einer Nase 22, der über einen hinteren Gleitschuh 24 verfahren werden kann. Der Gleitschuh 24 ist über einen Kabelantriebsmechanismus horizontal verfahrbar. Der vordere und der hintere Gleitschuh 18, 24 sind im Inneren der Profilschiene 14 längsverschieblich aufgenommen. Am hinteren Rand 26 der Führungskulisse 16 ist eine nach unten weisende Nase 28 einstückig angeformt. Unterhalb der Nase 28 ist in der Profilschiene 14 horizontal verschieblich ein Lagerteil 30 aufgenommen, das eine Wasserablaufrinne 32 trägt. Lagerteil 30 und Wasserablaufrinne 32 stellen eine separate, vormontierte Einheit dar. Unmittelbar unterhalb der Nase 28 besitzt das Lagerteil 30 eine der Nase 28 angepaßte Ausnehmung 34.

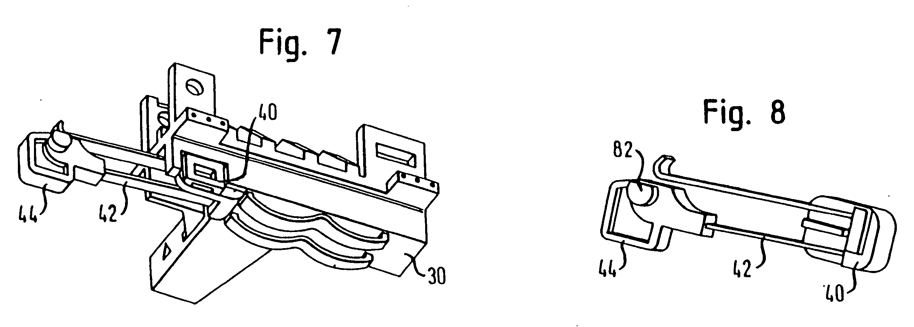

Unterhalb der Ausnehmung 34 wiederum hat das Lagerteil 30 eine seitliche Aufnahmeöffnung für ein Formstück 40, das über eine U-förmige Blattfeder 42 mit einem Rasthaken 44 verbunden ist. Formstück 40, Blattfeder 42 und Rasthaken 44 stellen eine vormontierte Einheit dar (Figur 8), die dadurch hergestellt wird, daß an die Blattfeder 42 das Formstück 40 und der Rasthaken 44 angespritzt werden.

Wie in den Figuren 1 und 7 zu sehen ist, steht der Rasthaken 44 im montierten Zustand vom Lagerteil 30 nach vorne ab.

In der Ausstell- und der Grundstellung muß die Position der Einheit aus Deckel 10, Führungskulisse 16 und der mit ihr gekoppelten Teile der Führungsmechanik und der Einheit aus Wasserablaufrinne 32 und ihrer beidseitigen Lagerteile 30 festgelegt sein. Eine Horizontalverschiebung muß verhindert werden.

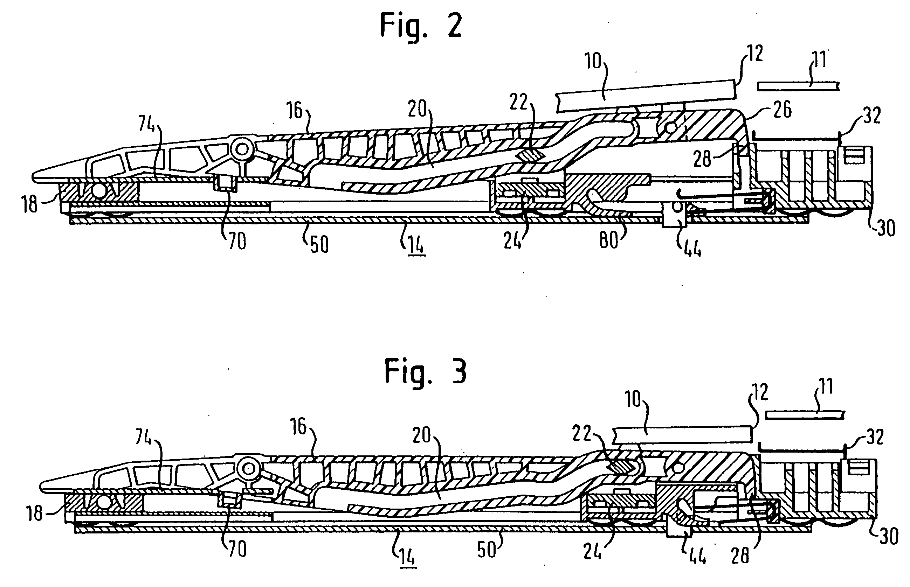

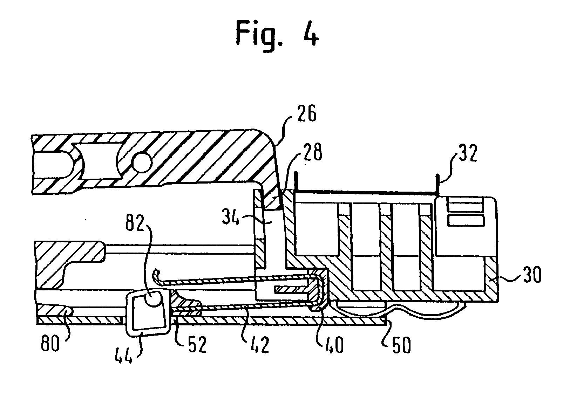

In der Ausstell- und der Grundposition hat die Profilschiene 14 in ihrem unteren Verbindungssteg 50 eine lokale Ausnehmung 52, in die der Rasthaken 44 eindringt (siehe Figuren 1 und 2), da der Rasthaken 44 durch die Blattfeder 42 nach unten kraftbelastet ist. Durch den Rasthaken 44 wird somit die Position der Wasserablaufrinne 32 horizontal gesichert (siehe auch Figur 4).

Die horizontale Lagefixierung der anderen Einheit, nämlich des Deckels 10 samt der Führungskulisse 16 und der Gleitschuhe 18, 24 erfolgt durch eine formschlüssige Verriegelung unmittelbar zwischen der Führungskulisse 16 und der Profilschiene 14. Nahe ihrer Schwenkachse A hat die Führungskulisse 16 nämlich an ihren Seitenflächen seitlich abstehende, einstückig angeformte Fortsätze 70 (siehe Figuren 1 bis 3, 5 und 6a und 6b), die in zugeordnete lokale Ausnehmungen 72 in den oberen Stegen 74 der Profilschiene 14 ragen. Die Fortsätze 70 sind so positioniert und so hoch, daß sie sowohl in der ausgestellten als auch in der Grundstellung (Figuren 1 und 2) in die Ausnehmungen 72 ragen und an den Stegen 74 anschlagen würden, wenn versucht werden würde, die Führungskulisse 16 und damit auch den Deckel 10 horizontal in eine Richtung zu verschieben. Die Fortsätze 70 sind aber andererseits so positioniert, daß sie in der abgesenkten Position unter die Stege 74 tauchen und vollständig in dem von der Profilschiene 14 umschriebenen Raum liegen (siehe Figur 3).

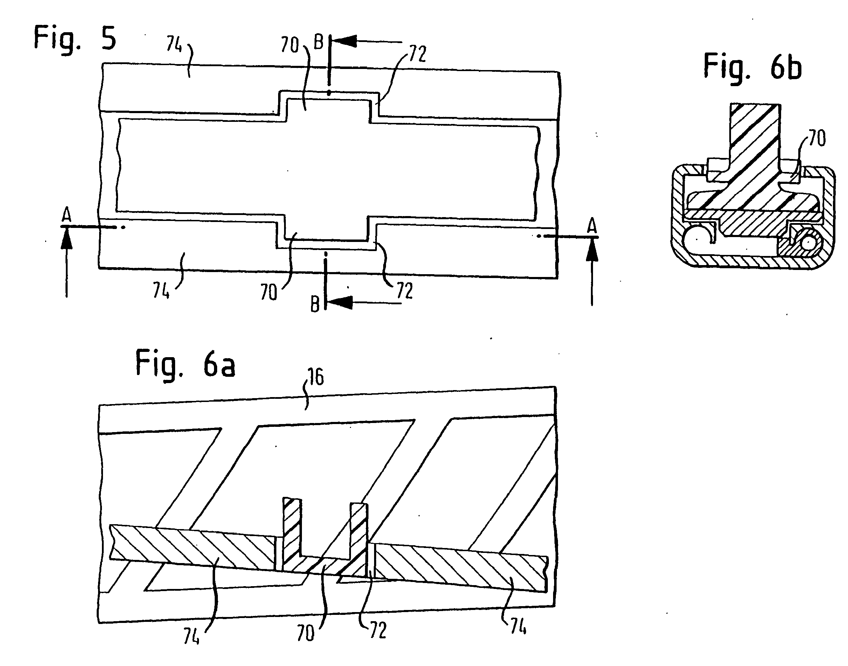

Die Funktionsweise der erfindungsgemäßen Führungsmechanik wird im folgenden erläutert. In der Grundstellung ragen die Fortsätze 70 in die Ausnehmung 72 (Figuren 2, 6), so daß die Führungskulisse 16 an jeder horizontalen Verschiebung längs der Profilschiene 14 gehindert ist. Die Nase 28 ragt in ihre zugeordnete Ausnehmung 34, so daß die durch die Führungskulisse 16 definierte Einheit mit der durch die Wasserablaufrinne 32 definierten Einheit in Verschieberichtung formschlüssig gekoppelt ist. Der Rasthaken 44 ragt in die Ausnehmung 52 (Figur 4), so daß in der Grundstellung eine zusätzliche Sicherung vorhanden ist.

Soll der Deckel 10 ausgestellt werden, so wird der Gleitschuh 24 nach vom verfahren, vorzugsweise motorisch. Durch die Nase 22, die in der Kulissenbahn 20 entlanggleitet, wird die Führungskulisse 16 nach oben geschwenkt (Figur 1). In der voll ausgestellten Stellung ist die die Führungskulisse 16 und den Deckel 10 umfassende Einheit vollständig von der die Wasserablaufrinne 32 aufweisenden Einheit mechanisch entkoppelt, da die Nase 28 aus der Ausnehmung 34 herausgetreten ist. In dieser Stellung werden diese beiden Einheiten durch die ihr zugeordneten Fortsätze 70 bzw. dem Rasthaken 44, d.h. durch eigene Positionssicherungen, gegen horizontales Verschieben gesichert.

Soll der Deckel 10 nach hinten verfahren werden, muß sein hinterer Rand 12 unter den Rand 11 abtauchen. Der Gleitschuh 24 wird deshalb nach hinten verfahren (Figur 3). In der abgesenkten Stellung tauchen die Fortsätze 70, wie bereits erläutert, unter die Stege 74 (Figur 3). Der Gleitschuh 24 wird weiter nach hinten verfahren, so daß ein an ihm zum Rasthaken 44 ragender keilförmiger Fortsatz 80 (siehe Figuren 2 und 4) an seitlichen Mitnehmernasen 82 am Rasthaken 44 angreift und diesen nach oben in eine ausgerückte Stellung bringt. Nun können die beiden miteinander gekoppelten Einheiten zusammen horizontal verfahren werden.

## Patentansprüche

1. Führungsmechanik für den Deckel (10) eines Schiebehebedachs, mit einer Führungskulisse (16), die mit dem Deckel (10) zumindest indirekt gekoppelt ist und für dessen Ausstellbewegung sorgt, und einer am hinteren Rand (12) des Deckels (10) quer zum Fahrzeug verlaufenden Wasserablaufrinne (32) mit zugeordnetem Lagerteil (30), das zusammen mit der Wasserablaufrinne (32) bei horizontaler Verschiebung des Deckels (10) ebenfalls verschoben wird, wobei die Führungskulisse in einer ausgestellten Position des Deckels (10) in horizontaler Verschieberichtung (Fahrzeuglängsrichtung) vollständig von der Wasserablaufrinne (32) entkoppelt ist,
**dadurch gekennzeichnet, daß**
die Führungskulisse (16) in einer Grundposition des Deckels in horizontaler Richtung mit der Wasserablaufrinne (32) formschlüssing gekoppelt ist.

2. Führungsmechanik nach Anspruch 1, **dadurch gekennzeichnet, daß** das Lagerteil (30) der Wasserablaufrinne (32) eine in der ausgestellten Position des Deckels (10) wirkende eigene Positionssicherung gegen eine horizontale Verschiebung hat.

3. Führungsmechanik nach Anspruch 2, **dadurch gekennzeichnet, daß** die Positionssicherung eine formschlüssige Verrastung zwischen einem dem Lagerteil (30) zugeordneten Rasthaken (44) und einer Profilschiene (14) ist, längs der das Lagerteil (30) der Wasserablaufrinne (32) verschiebbar ist.

4. Führungsmechanik nach Anspruch 3, **dadurch gekennzeichnet, daß** der Rasthaken (44) federnd angestellt und in eine lokale Ausnehmung (52) in der Profilschiene (40) einrückbar ist.

5. Führungsmechanik nach Anspruch 3 oder 4, **dadurch gekennzeichnet, daß** das Lagerteil (30) ein in der Profilschiene (14) verschiebbares Kunststoffteil ist und der aus Kunststoff bestehende Rasthaken (44) an eine Feder (42) angespritzt ist.

6. Führungsmechanik nach einem der vorhergehenden Ansprüche, **dadurch gekennzeichnet, daß** zumindest ein Teil einer die Führungskulisse (16) aufweisenden Einheit neben der Grund- auch in einer abgesenkten Position des Deckels (10) formschlüssig in eine Einheit aus Wasserablaufrinne (32) und Lagerteil (30) eingreift und die Einheiten in horizontaler Verschieberichtung formschlüssig miteinander koppelt.

7. Führungsmechanik nach Anspruch 6, **dadurch gekennzeichnet, daß** die Führungskulisse (16) im Bereich ihres hinteren Endes eine nach unten weisende Nase (28) hat, die in eine Ausnehmung (34) im Lagerteil taucht.

8. Führungsmechanik nach einem der vorhergehenden Ansprüche, **dadurch gekennzeichnet, daß** zumindest ein Teil einer die Führungskulisse (16) aufweisenden Einheit in einer Ausstellposition direkt mit der Profilschiene (14) formschlüssig so verriegelt ist, daß der Deckel (10) an einer Verschiebung in horizontaler Richtung gehindert wird.

## Claims

1. A guide mechanism for the cover (10) of a sliding/tilting roof, comprising a slotted guide (16) that is at least indirectly coupled to the cover (10) and provides for the rising movement thereof, and a drain gutter (32) extending at the rear edge (12) of the cover (10) transversely to the vehicle and having an associated bearing part (30) which on horizontal shifting of the cover (10) is likewise shifted together with the drain gutter (32), the slotted guide being fully decoupled from the drain gutter (32) in a horizontal direction of displacement (longitudinal direction of the vehicle) in a raised position of the cover (10),
**characterized in that**
in an initial position of the cover, the slotted guide (16) is positively coupled to the drain gutter (32) in a horizontal direction.

2. The guide mechanism as claimed in claim 1, **characterized in that** the bearing part (30) of the drain gutter (32) has a separate locking arrangement that is active in the raised position of the cover (10), to secure the bearing part (30) in position against horizontal displacement.

3. The guide mechanism as claimed in claim 2, **characterized in that** the locking arrangement is a positive latching connection between a latching hook (44) associated with the bearing part (30) and a profiled rail (14) along which the bearing part (30) of the drain gutter (32) is adapted to be shifted.

4. The guide mechanism as claimed in claim 3, **characterized in that** the latching hook (44) is spring-mounted and adapted to engage into a local recess (52) in the profiled rail (40).

5. The guide mechanism as claimed in claim 3 or 4, **characterized in that** the bearing part (30) is a plastic part adapted to be shifted within the profiled rail (14) and the latching hook (44) consisting of a plastic material is injection-molded to a spring (42).

6. The guide mechanism as claimed in any of the preceding claims, **characterized in that** in both the initial position and in a lowered position of the cover (10) at least a portion of a unit including the slotted guide (16) positively engages in a unit comprised of the drain gutter (32) and the bearing part (30) to couple the units with each other with a positive fit in the horizontal direction of displacement.

7. The guide mechanism as claimed in claim 6, **characterized in that** the slotted guide (16), in the area of the rear end thereof, has a downwardly pointing nose (28) diving into a recess (34) in the bearing part.

8. The guide mechanism as claimed in any of the preceding claims, **characterized in that** in a raised position at least a portion of a unit including the slotted guide (16) is directly locked with the profiled rail (14) with a positive fit such that the cover (10) is prevented from being displaced in the horizontal direction.

## Revendications

1. Mécanisme de guidage pour le couvercle (10) d'un toit ouvrant, comportant une coulisse de guidage (16) qui est accouplée au moins indirectement au couvercle (10) et assure son mouvement de projection, et une gouttière (32) s'étendant transversalement au véhicule sur le bord postérieur (12) du couvercle et possédant une partie de montage (30) qui, lors du déplacement horizontal du couvercle (10), est également déplacée conjointement avec la gouttière (32), la coulisse de guidage étant totalement découplée de la gouttière (32) dans une direction de déplacement horizontale (direction longitudinale du véhicule), dans une position projetée du couvercle (10),
**caractérisé en ce que**
la coulisse de guidage (16) est accouplée par coopération de formes avec la gouttière (32) dans une position de base du couvercle en direction horizontale.

2. Mécanisme de guidage selon la revendication 1, **caractérisé en ce que** la partie de montage (30) de la gouttière (32) a une sécurité de position propre agissant à l'encontre d'un déplacement horizontal dans la position projetée du couvercle (10).

3. Mécanisme de guidage selon la revendication 2, **caractérisé en ce que** la sécurité de position est un enclenchement par coopération de formes entre un crochet d'enclenchement (44) associé à la partie de montage (30) et un rail profilé (14) le long duquel la partie de montage (30) de la gouttière peut être déplacée.

4. Mécanisme de guidage selon la revendication 3, **caractérisé en ce que** le crochet d'enclenchement (44) est serré de manière élastique et peut s'engager dans un évidement (52) local dans le rail profilé (40).

5. Mécanisme de guidage selon la revendication 3 ou 4, **caractérisé en ce que** la partie de montage (30) est une pièce de matière plastique déplaçable dans le rail profilé (14), et le crochet d'enclenchement (44) en matière plastique est moulé par injection sur un ressort (42).

6. Mécanisme de guidage selon l'une des revendications précédentes, **caractérisé en ce que** dans une position abaissée du couvercle (10), en plus de la position de base, au moins une partie d'une unité présentant la coulisse de guidage (16) s'engage par coopération de formes dans une unité constituée par la gouttière (32) et par la partie de montage (30) et accouple l'une à l'autre les unités par coopération de formes en direction de déplacement horizontal.

7. Mécanisme de guidage selon la revendication 6, **caractérisé en ce que** la coulisse de guidage (16) a dans la région de son extrémité postérieure un ergot (28) dirigé vers le bas qui plonge dans un évidement (34) dans la partie de montage.

8. Mécanisme de guidage selon l'une des revendications précédentes, **caractérisé en ce que** dans une position projetée, au moins une partie d'une unité présentant la coulisse de guidage (16) est verrouillée par coopération de formes directement avec le rail profilé (14), de telle sorte que le couvercle (10) est empêché de se déplacer en direction horizontale.
